# EUROPEAN PATENT SPECIFICATION

(11) **EP 4 323 849 B1**
(45) Date of publication and mention of the grant of the patent: **01.01.2025**
(21) Application number: 22717278.0
(22) Date of filing: 14.04.2022
(51) Int. Cl.: G05D 23/19, F25B 41/30, F24F 11/00, F25B 49/02, F25B 5/02

(54) **METHOD FOR CONTROLLING AN AIR-COOLED REFRIGERATION CYCLE APPARATUS**
VERFAHREN ZUR STEUERUNG EINER LUFTGEKÜHLTEN KÄLTEKREISLAUFVORRICHTUNG
PROCÉDÉ DE COMMANDE D'UN APPAREIL À CYCLE DE RÉFRIGÉRATION REFROIDI PAR AIR

(30) Priority: 16.04.2021 IT 202100009611
(43) Date of publication of application: 21.02.2024
(73) Proprietor: Mitsubishi Electric Hydronics & IT Cooling Systems S.p.A., 36061 Bassano del Grappa (Vicenza) (IT)
(72) Inventor: ROSSO, Luigi, 36061 Bassano Del Grappa (VI) (IT); DACCO', Guido, 36061 Bassano Del Grappa (VI) (IT)
(74) Representative: Studio Torta S.p.A.
(86) International application number: PCT/IB2022/053522
(87) International publication number: WO 2022/219580

(56) References cited:
- US-A1- 2011 023 534
- US-A1- 2016 334 142
- US-A1- 2019 078 818

## Description

### Technical Field of the Invention

The present invention concerns a method for controlling an air-cooled refrigeration cycle apparatus, the air-cooled refrigeration cycle apparatus and a related computer program product, in particular for controlling, independently between one another and according to a control curve, a plurality of indoor units of the air-cooled refrigeration cycle apparatus.

### State of the Art

Air-cooled refrigeration cycle apparatuses are widely known and used for managing media temperature and/or humidity in closed spaces.

In details, variable refrigerant flow (VRF) systems are used for the heating, ventilation, and air conditioning (HVAC) applications.

Generally in VRF systems all indoor units work in almost the same ambient conditions between them and thus they can be easily and efficiently managed by controlling the cooling power of a same outdoor unit coupled to them. Usually, the total cooling power of the VRF system is regulated by controlling the evaporation pressure of the outdoor unit.

Nonetheless, HVAC applications may require that several closed spaces are heated or ventilated by the same VRF system at respective temperatures different between them, and this cannot be achieved in known VRF system where all the indoor units are connected to the same refrigerant piping and condensing unit/s. Such condition is typical in ICT cooling application wherein the VRF system is used for conditioning sever machines of an ICT system.

Therefore, using known VRF system for HVAC applications is not enough to guarantee the performances requested for each indoor unit, which should be able to work in a wide range of air room temperatures and would have to provide a stable and continuous air temperatures.

Moreover, using known VRF systems for HVAC applications requires frequently varying the power and the evaporation pressure of the outdoor unit, and this results in high energetic consumption. Such high energetic consumption is a crucial parameter, especially for large plants such as large process cooling installations or those for industrial or commercial spaces, which need to condition great flows of air.

Therefore, the need is felt to provide an air-cooled refrigeration cycle apparatus adapted to efficiently work in HVAC applications, as well as to improve its efficiency so that its energetic consumption is reduced. In particular such need is felt for HVAC applications for ICT cooling.

Document US 2011/023534 A1 relates to refrigeration systems including refrigerant circuits performing refrigeration cycles, and more particularly to techniques for controlling operation of a refrigeration system including a refrigerant circuit in which a plurality of evaporators are connected to each other.

Document US 2016/334142 relates generally to transport refrigeration systems, and more particularly to adaptive control of a multi-compartment transport refrigeration system.

Document US 2019/078818 relates generally to a refrigeration system and more particularly to a refrigeration system with a subcooler configured to subcool a liquid refrigerant.

Document US 2015/059373 pertains to the field of refrigerant vapor compression systems, and particularly to a system for dynamically optimizing capacity and efficiency during less than optimal operating conditions to provide enhanced performance.

Document US 2015/027139 relates to cooling systems, and more particularly, expansion valve control systems.

### Subject and Summary of the Invention

An aim of the present invention is to satisfy the above mentioned needs.

The aforementioned aim is reached by a method for controlling an air-cooled refrigeration cycle apparatus, by the air-cooled refrigeration cycle apparatus and by a related computer program product, as claimed in the appended set of claims.

### Brief Description of the Drawings

For a better understanding of the present invention, a preferred embodiment is described in the following, by way of a non-limiting example, with reference to the attached drawings wherein:
- Figure 1 is a schematic diagram of an air-cooled refrigeration cycle apparatus, according to an embodiment of the present invention;
- Figure 2 is a schematic view of the air-cooled refrigeration cycle apparatus of Figure 1, according to an embodiment of the present invention;
- Figure 3 is a block diagram illustrating a control system of the air-cooled refrigeration cycle apparatus of Figure 1, according to an embodiment of the present invention; and
- Figure 4 is a graphic illustrating a control curve used by the control system of Figure 3, according to an embodiment of the present invention.

### Detailed Description of Preferred Embodiments of the Invention

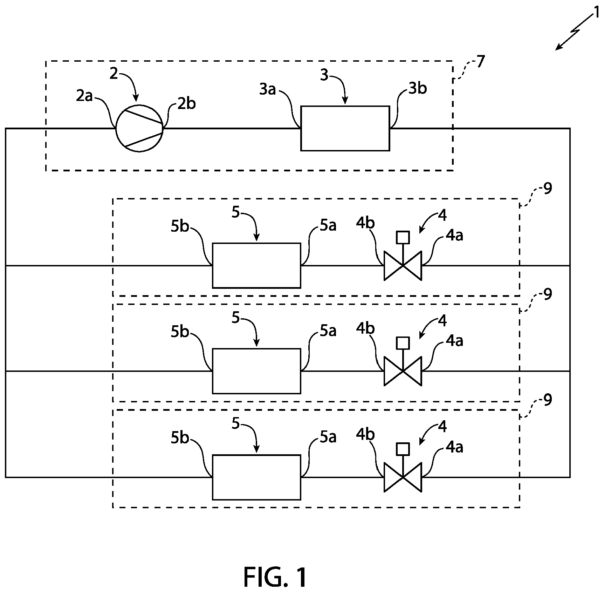

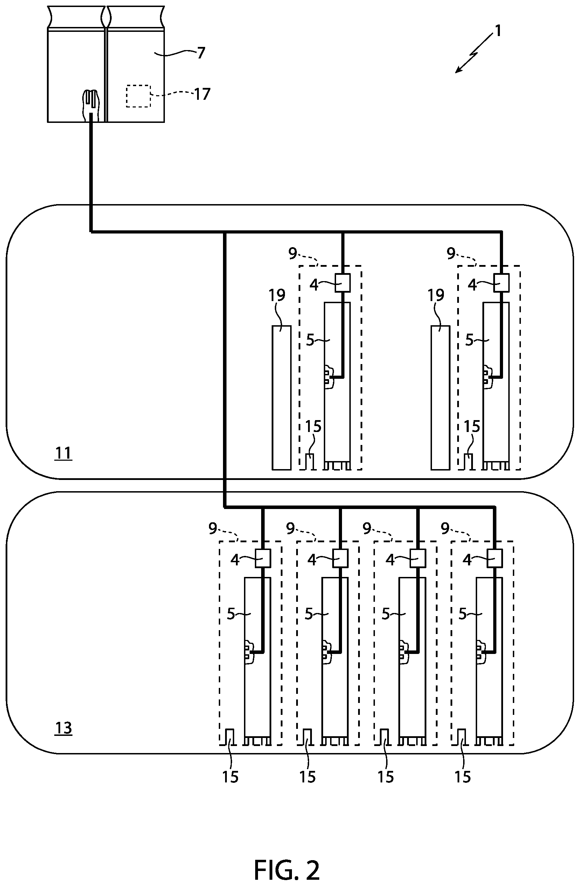

Figure 1 schematically shows an air-cooled refrigeration cycle apparatus 1 for heating, ventilation, and air conditioning (HVAC) applications. In particular, the air-cooled refrigeration cycle apparatus 1 is configured to refrigerate the air in at least one closed space (i.e., rooms 11, 13 shown in Figure 2).

The air-cooled refrigeration cycle apparatus 1 comprises a compressor mean 2 configured to move a refrigerant fluid between an inlet 2a and an outlet 2b of the compressor mean 2 and to increase its pressure.

The air-cooled refrigeration cycle apparatus 1 further comprises an air-cooled module 3 fluidly connected in series to the compressor mean 2 and configured to desuperheat, condense and subcool the refrigerant fluid between an inlet 3a and an outlet 3b of the air-cooled module 3, thereby exchanging thermal energy with the ambient air and, in particular, providing heat to the latter.

In details, the compressor mean 2 and the air-cooled module 3 are comprised in an outdoor unit 7 of the air-cooled refrigeration cycle apparatus 1, placed outside the one or more closed spaces.

The air-cooled refrigeration cycle apparatus 1 further comprises a plurality of indoor units 9 (Figure 1 exemplarily shows three indoor units 9), placed inside the one or more closed spaces.

Each indoor unit 9 comprises a respective expansion mean 4 that is fluidly connected in series to the air-cooled module 3 and is configured to decrease the pressure of the refrigerant fluid between a respective inlet 4a and a respective outlet 4b of said expansion mean 4. In particular, the expansion means 4 are electronic expansion valves (EEV), as better described in the following.

Each indoor unit 9 further comprises a respective evaporation mean (or evaporator) 5 that is fluidly connected in series to the expansion mean 4 and is configured to allow the passage of phase from liquid to gaseous state of said refrigerant fluid between an inlet 5a and an outlet 5b of said evaporation mean 5. In other words, the evaporation mean 5 is configured to evaporate and superheat the temperature of the refrigerant fluid, thereby exchanging thermal energy with the media (e.g., air) in the closed space housing the indoor unit 9, and in particular absorbing heat from the media. Moreover, the inlet 2a of the compressor mean 2 is further fluidly connected in series to each evaporation mean 5.

Therefore, the indoor units 9 are connected in parallel between them, and each of them is connected in series between the outlet 3b of the air-cooled module 3 and the inlet 2a of the compressor mean 2.

Moreover, the air-cooled refrigeration cycle arrangement 1 comprises a plurality of temperature sensors 15 and a control unit 17 (e.g., an FPGA or a dedicated controller), shown in Figure 2.

Each temperature sensor 15 is coupled to a respective evaporation mean 5 so as to detect the temperature of the media at the evaporation mean 5 (in the following, also called delivery air temperature TDi), thus detecting the thermal energy exchange caused in the media by said respective evaporation mean 5. In particular, the temperature sensors 15 generate respective temperature signals indicative of the temperatures of the respective evaporation means 5. For example, each temperature sensor 15 is closer to the respective evaporation mean 5 than to any other evaporation mean 5. As an example, each temperature sensor 15 is comprised in the indoor unit 9 of the respective evaporation mean 5.

The control unit 17 is coupled (e.g., electrically or via transceiving modules) to the temperature sensors 15, the compressor mean 2 and the expansion means 4, and is configured to acquire the temperature signals from the temperature sensors 15 and to control the compressor mean 2 and the expansion means 4 based on the acquired temperature signals, as better described in the following. For example, the control unit 17 is comprised in the outdoor unit 7.

Figure 2 shows the air-cooled refrigeration cycle apparatus 1, according to an embodiment of the present invention. In particular, the air-cooled refrigeration cycle apparatus 1 is used for refrigerating the air in at least one room (i.e., the previously mentioned one or more closed spaces) of a building.

As a non-limiting example, Figure 2 shows a first room 11 and a second room 13. The first room 11 houses a plurality of heat-generating devices 19 (in the following, exemplary reference will be made to electronic devices 19 such as computers, servers or computer racks that, during use, overheat the surrounding air) that may cause temperature inhomogeneity in the first room 11 (i.e., areas of the first room 11 at higher temperatures than other areas of the first room 11, such temperature difference being caused for example by certain electronic devices 19 working and other electronic devices 19 being off or in standby), while the air temperature in the second room 13 is substantially homogeneous (i.e., all areas of the second room 13 are substantially at a same temperature, e.g. 3510.5°C).

In details, the outdoor unit 7 is placed outside the first and second rooms 11, 13 (e.g., outside the building) and the indoor units 9 are placed inside the first and second rooms 11, 13. Figure 2 exemplarily shows two indoor units 9 in the first room 11 and four indoor units 9 in the second room 13, although it is evident that such numbers are only exemplary and can vary.

In the first room 11, the expansion means 4 are controlled by the control unit 17 to exchange with the air in the first room 11 respective amounts of thermal energy that may be different between each other. In particular, each indoor unit 9 is adapted to refrigerate a respective electronic device 19 (e.g., is placed closer to this electronic device 19 than to any other electronic device 19 and,). Therefore, in the first room 11 the indoor units 9 are controlled to work independently from each other so that the possible temperature inhomogeneity caused by the different working of the electronic devices 19 can be mitigated. In this way the indoor unit 9 associated to an electronic device 19 working at full power can refrigerate more than the indoor unit 9 associated to an electronic device 19 that is off or in standby, so that the overall refrigeration efficiency is optimized.

In the second room 13, since no temperature inhomogeneity is present, the expansion means 4 are controlled by the control unit 17 to exchange with the air the same amount of thermal energy. In other words, the expansion means 4 work in parallel between them, each contributing to the overall refrigeration of the second room 13 by providing a same amount of thermal energy exchange.

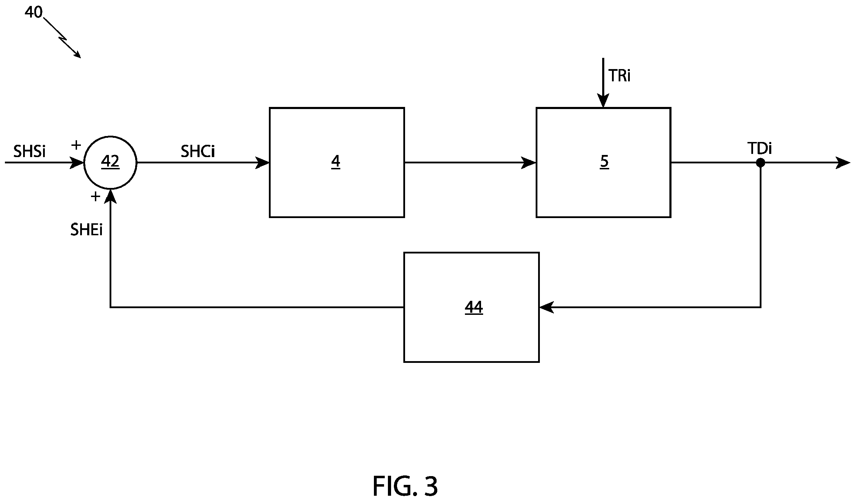

With reference to Figure 3, a control method of the expansion means 4 is discussed. In particular, the control method is described according to a control system 40 shown in Figure 3.

The control method is an iterative closed-loop control implemented by the control unit 17 to control each one of the expansion means 4 and, thus, the amount of refrigerant fluid flowing into the respective evaporation mean 5 and the thermal energy exchange generated by the latter. In the following, the control method is described with reference to the i-th indoor unit 9 located, for example, in the first room 11.

In details, the control unit 17 comprises a sum block 42 receiving as inputs a superheat setpoint SHSi and a superheat error SHEi and generating as output a superheat command SHCi for controlling the i-th expansion mean 4. The superheat setpoint SHSi is an electric signal indicative of a setpoint temperature value for the control of the i-th expansion mean 4, generated by the control unit 17 as better described in the following. The superheat error SHEi is an electric signal indicative of a temperature error calculated by the control unit 17 at the immediately precedent iteration (e.g., the superheat error SHEi used in the j-th iteration is the one calculated at the (j-1)-th iteration), as better described in the following. At the first iteration of the control method (i.e., j=1), the superheat setpoint SHSi is set to a predefined setpoint value (e.g., indicative of, for example, 5°C) and the superheat error SHEi is set to a predefined error value (e.g., indicative of, for example, 0°C). In details, the predefined setpoint value and the predefined error value are stored in a data storage unit (not shown) of the control unit 17, such as a non-volatile memory. According to an aspect of the present invention, the superheat command SHCi is the sum of the superheat setpoint SHSi and of the superheat error SHEi (i.e., is an electric signal indicative of the sum of the setpoint temperature value and of the temperature error).

The i-th expansion mean 4 receives as input the superheat command SHCi from the control unit 17 and varies the flow of the refrigerant fluid passing through it based on the superheat command SHCi, according to known techniques.

The i-th evaporation mean 5 receives the refrigerant fluid from the respective expansion mean 4 and absorbs heat from the air in the first room 11. In particular, the absorbed heat amount is proportional to the amount of refrigerant fluid coming from the expansion mean 4. In further details, the evaporation mean 5 receives a received air flow at a received air temperature TRi (i.e., air in the first room 11 coming into contact with the evaporation mean 5 and overheated by the electronic devices 19) and generates a delivery air flow at the delivery air temperature TDi lower than the received air temperature TRi.

The delivery air temperature TDi is acquired by the control unit 17 through the i-th temperature sensor 15.

The control unit 17 further comprises a superheat error block 44 that acquires the delivery air temperature TDi through the i-th temperature sensor 15 and, based on it, calculates the superheat error SHEi that will be received by the sum block 42 at the next iteration (i.e., (j+1)-th iteration).

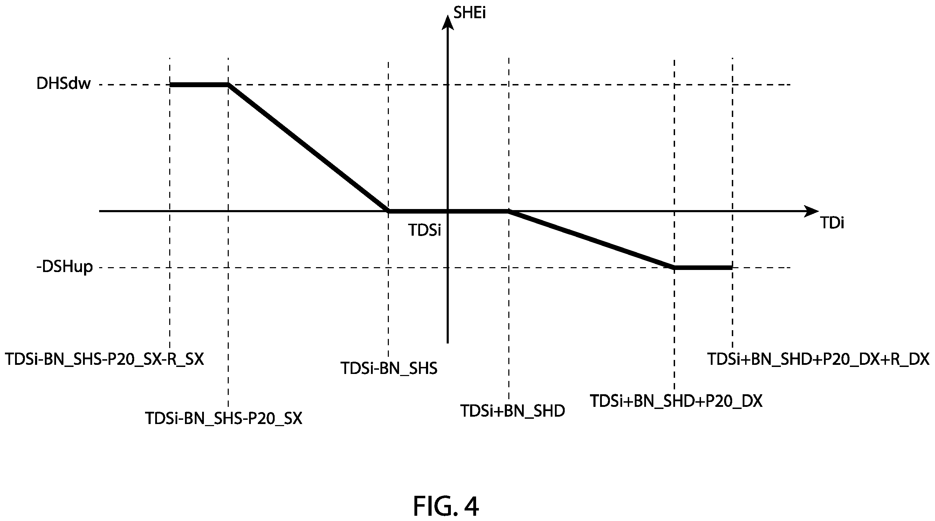

In particular, the superheat error block 44 calculates the superheat error SHEi according to a control curve shown in the graph of Figure 4, describing a control relationship.

For values of the delivery air temperature TDi greater than, or equal to, a supply air setpoint TDSi (also called supply air setpoint temperature TDSi; i.e., a predefined supply air temperature that is a target temperature for the first room 11, to be reached through the use of air-cooled refrigeration cycle apparatus 1, and that depends on the specific application and requirements of the first room 11, and that for example is equal to about 25°C for the first room 11):
- if the delivery air temperature TDi is comprised between the supply air setpoint TDSi and a first positive threshold value (extremal value excluded) greater than the supply air setpoint TDSi, then the superheat error SHEi is set to a first predefined value (i.e., *SHEi* = 0 if *TDSi* ≤ *TDi* ≤ *TDSi* + *BN_SHD,* where *BN_SHD* is a first positive temperature neutral range for superheat calculation at *TDi > TDSi* and, for example, is equal to 0.5°C);
- if the delivery air temperature TDi is comprised between, or equal to, the first positive threshold value and a second positive threshold value greater than the first positive threshold value, then the superheat error SHEi is calculated as a function of the delivery air temperature TDi and, in particular, decreases (increases in absolute value) as the delivery air temperature TDi increases (according to an embodiment of the present invention, *SHEi* = - *DSHup* · ((*TDi* - *TDSi* - *BN_SHD*)/*P*20*_DX*) if *TDSi* + *BN_SHD < TDi < TDSi* + *BN_SHD* + *P20_DX,* where *DSHup* is a maximum decrease of the superheat value that is higher than the superheat setpoint SHSi to avoid negative overheating and that, for example, is equal to +2°C, and where *P*20*_DX* is a superheat decrease proportional range for superheat calculation at *TDi* > *TDSi* + *BN_SHD* + *P*20*_DX* and, for example, is equal to 2°C) ;
- if the delivery air temperature TDi is comprised between the second positive threshold value and a third positive threshold value greater than the second positive threshold value (extremal values excluded), then the superheat error SHEi is set to a second predefined value (according to an embodiment of the present invention, *SHEi* = -*DSHup* if *TDSi* + *BN_SHD* + *P20_DX* ≤ *TDi* ≤ *TDSi* + *BN_SHD* + *P20_DX* + *R_DX,* where *R_DX* is a second positive temperature neutral range for superheat calculation at *TDi* > *TDSi* and, for example, is equal to 0.5°C) .

For values of the delivery air temperature TDi lower than the supply air setpoint TDSi:
- if the delivery air temperature TDi is comprised between (extremal values excluded) the supply air setpoint TDSi and a first negative threshold value lower than the supply air setpoint TDSi (i.e., in absolute value, greater that the supply air setpoint TDSi), then the superheat error SHEi is set to the first predefined value (i.e., *SHEi* = 0 if *TDSi* - *BN_SHS* ≤ *TDi* < *TDSi,* where *BN_SHS* is a first negative temperature neutral range for superheat calculation at *TDi* < *TDSi* and, for example, is equal to 0.5°C);
- if the delivery air temperature TDi is comprised between, or equal to, the first negative threshold value and a second negative threshold value lower than the first negative threshold value (i.e., in absolute value, greater that the first negative threshold), then the superheat error SHEi is calculated as a function of the delivery air temperature TDi and, in particular, increases as the delivery air temperature TDi decreases (according to an embodiment of the present invention, *SHEi* = *DSHdw* · ((*TDSi* - *TDi* - *BN_SHS*)/*P*20_*SX*) if *TDSi* - *BN_SHS* - *P*20*_SX < TDi < TDSi* - *BN_SHS,* where *DSHdw* is a maximum increase of the superheat value that is, for example, equal to +15°C, and where *P20_SX* is a superheat increase proportional range for superheat calculation at *TDi* < *TDSi* - *BN_SHS* - *P20_SX* and, for example, is equal to 2°C) ;
- if the delivery air temperature TDi is comprised between (extremal values excluded) the second negative threshold value and a third negative threshold value lower than the second negative threshold (i.e., in absolute value, greater that the second negative threshold), then the superheat error SHEi is set to a third predefined value (according to an embodiment of the present invention, *SHEi* = *DSHdw* if *TDSi* - *BN_SHS* - *P*20_*SX* - *R_SX* ≤ *TDi* ≤ *TDSi* - *BN_SHS* - *P20_SX,* where *R_SX* is a second negative temperature neutral range for superheat calculation at *TDi* < *TDSi* and, for example, is equal to 0.5°C) .

Moreover, optionally, for values of the delivery air temperature TDi greater than, or equal to, the third positive threshold value, the control unit 17 decreases a refrigerant fluid pumping power of the outdoor unit 7 (i.e., decreases a power of the compressor mean 2 in a per se known way, e.g. decreasing the frequency of compression and/or modifying the setting of blades of the compressor mean 2) so that a decreased amount of refrigerant fluid is moved into the air-cooled refrigeration cycle apparatus 1. For example, the refrigerant fluid pumping power is decreased by a pumping power predefined value.

Analogously, optionally, for values of the delivery air temperature TDi lower than, or equal to, the third negative threshold value, the control unit 17 increases the refrigerant fluid pumping power (i.e., the power of the compressor mean 2) to increase the amount of refrigerant fluid moved into the air-cooled refrigeration cycle apparatus 1. For example, the refrigerant fluid pumping power is increased by the pumping power predefined value.

As an example, the thresholds, the above-mentioned parameters (e.g., *P*20*_SX, R_SX,* etc.) and the predefined values (e.g., *DSHdw*) are stored in the data storage unit.

In other words, the control unit 17 performs the following controls:
- if the delivery air temperature TDi is comprised between (extremal values excluded) the first negative threshold value and the first positive threshold value, then the superheat error SHEi is set to the first predefined value (e.g., 0°C);
- if the delivery air temperature TDi is comprised between, or equal to, the second negative threshold value and the first negative threshold value, then the superheat error SHEi increases as the delivery air temperature TDi decreases (i.e., increases as the delivery air temperature TDi increases in absolute value), in particular linearly; or, if the delivery air temperature TDi is comprised between, or equal to, the first positive threshold value and the second positive threshold value, then the superheat error SHEi decreases as the delivery air temperature TDi increases (i.e., increases in absolute value as the delivery air temperature TDi increases), in particular linearly;

- if the delivery air temperature TDi is comprised between (extremal values excluded) the second positive threshold value and the third positive threshold value, then the superheat error SHEi is set to the second predefined value; or, if the delivery air temperature TDi is comprised between (extremal values excluded) the third negative threshold value and the second negative threshold value, then the superheat error SHEi is set to the third predefined value; and
- optionally, if the delivery air temperature TDi is greater than, or equal to, the third positive threshold value, the refrigerant fluid pumping power of the outdoor unit 7 is decreased; or, optionally, if the delivery air temperature TDi is lower than, or equal to, the third negative threshold value, the refrigerant fluid pumping power of the outdoor unit 7 is increased.

As previously mentioned, the superheat setpoint SHSi is set by the control unit 17. In particular, the superheat setpoint SHSi is set to a predefined setpoint value (e.g., equal to about 5°C and, for example, stored in the data storage unit) at the first iteration of the control method (i.e., j=1), and is updated at the following iterations (i.e., j>1) based on the detected delivery air temperature TDi. According to an embodiment of the present invention, the superheat setpoint SHSi is calculated at the j-th iteration, with j>1, according to the superheat error SHEi calculated at the immediately precedent iteration (i.e., j-1) and, in particular, by: decreasing the superheat setpoint SHSi at the immediately precedent iteration (i.e., j-1) by a predefined superheat amount (e.g., 0.5°C and, for example, stored in the data storage unit), if the superheat error SHEi calculated at the immediately precedent iteration is negative and, in absolute value, greater than a superheat threshold (e.g., 1°C and, for example, stored in the data storage unit); increasing the superheat setpoint SHSi at the immediately precedent iteration by the predefined superheat amount, if the superheat error SHEi calculated at the immediately precedent iteration is positive and greater than the superheat threshold; or being equal to the superheat setpoint SHSi at the immediately precedent iteration, if the superheat error SHEi calculated at the immediately precedent iteration is, in absolute value, lower than, or equal to, the superheat threshold. In other words, the updating of the superheat setpoint SHSi is filtered on the basis of the superheat error SHEi (and thus of the delivery air temperature TDi) calculated at the immediately precedent iteration. This prevents the superheat setpoint SHSi to be continuously updated at each iteration following small variations of the superheat error SHEi (and thus of the delivery air temperature TDi).

Moreover, according to an embodiment of the present invention, if the air-cooled refrigeration cycle apparatus 1 is stable (i.e., if the superheat setpoint SHSi has been stable in a number of immediately precedent iterations and, in details, if the superheat setpoint SHSi for all the expansion means 4 has not been modified in the last iterations, e.g. in the last 5 iterations) and if the superheat setpoint SHSi for each expansion mean 4 is greater than a standard superheat setpoint (e.g., indicative of, for example, 5°C) and, for example, stored in the data storage unit), then the control unit 17 decreases the refrigerant fluid pumping power of the outdoor unit 7, i.e. decreases the power of the compressor mean 2, for example by a predefined amount (e.g., by about 5% of its current value), so that the air-cooled refrigeration cycle apparatus 1 tries to stabilize itself at lower powers of the compressor mean 2, to increase its efficiency.

In view of the foregoing, the advantages of the invention are apparent.

In particular, the air-cooled refrigeration cycle apparatus 1 controlled according to the control method allows to optimize, in terms of efficiency and reliability, the management of the power demands and of the cooling power provided by the indoor units 9 that may work in different ambient conditions, although connected to the same outdoor unit 7.

The control method allows to regulate the thermal energy exchange provided by each indoor unit 9 by controlling the respective expansion mean 4, thus without the constant need of regulating the power of the compressor mean 2. Therefore, the control method allows to auto-regulate the amount of refrigerant fluid and cooling power of the air-cooled refrigeration cycle apparatus 1 specifically for certain indoor units 9 requiring being regulated, to match the requests of the applications without the need to regulate the other indoor units 9 and the outdoor unit 7.

It is clear that modifications can be made to the present invention, which do not extend beyond the scope of protection defined by the claims.

For example, a plurality of outdoor units 7 may be present. In this case, the outdoor units 7 are, for example, fluidly connected in parallel between each other and in series with the indoor units 9, to increase the efficiency of the air-cooled refrigeration cycle apparatus 1.

Moreover, the indoor units 9 may be placed in rooms other than the first and second room 11, 13. For example, they may be housed in a single room, or in rooms with different features with respect to those previously described (i.e., with/without temperature inhomogeneity, etc.).

## Claims

1. Method for controlling an air-cooled refrigeration cycle apparatus (1) comprising a control unit (17), a first outdoor unit (7) and a plurality of indoor units (9) housed in at least one closed space (11, 13),
each indoor unit (9) comprising:
- a respective expansion mean (4) that is controllable by the control unit (17), is fluidly connected in series to the first outdoor unit (7) and is configured to decrease the pressure, between an inlet (4a) and an outlet (4b) of said expansion mean (4), of a refrigerant fluid coming from the first outdoor unit (7),
- a respective evaporator (5) fluidly connected in series between the respective expansion mean (4) and the first outdoor unit (7), and configured to allow a passage of phase from liquid to gaseous state of said refrigerant fluid between an inlet (5a) and an outlet (5b) of said evaporator (5), thus generating a respective refrigerated air flow in the closed space (11, 13), and
- a respective temperature sensor (15) configured for detecting a delivery air temperature (TDi) of a refrigerated air flow,
the method comprising the step of regulating, at a current iteration and by the control unit (17), the respective refrigerated air flow from each indoor unit (9) by controlling, based on a respective superheat error (SHEi), the flow of the refrigerant fluid passing through the respective expansion mean (4),
**characterized in that** for each indoor unit (9), the superheat error (SHEi) at the current iteration is calculated by the control unit (17) at an iteration that is immediately precedent to the current iteration, by:
- acquiring the delivery air temperature (TDi) through the respective temperature sensor (15), and
- performing the following:
• if the delivery air temperature (TDi) is comprised between a first negative threshold value, lower than a supply air setpoint temperature TDSi (TDSi), and a first positive threshold value, greater than the supply air setpoint temperature TDSi (TDSi), setting the superheat error (SHEi) equal to a first predefined value;
• if the delivery air temperature (TDi) is comprised between the first negative threshold value and a second negative threshold value lower than the first negative threshold value, or is equal to the first negative threshold value or the second negative threshold value, increasing the superheat error (SHEi) as the delivery air temperature (TDi) decreases;
• if the delivery air temperature (TDi) is comprised between the first positive threshold value and a second positive threshold value greater than the first positive threshold value, or is equal to the first positive threshold value or the second positive threshold value, decreasing the superheat error (SHEi) as the delivery air temperature (TDi) increases;
• if the delivery air temperature (TDi) is comprised between the second positive threshold value and a third positive threshold value greater than the second positive threshold value, setting the superheat error (SHEi) equal to a second predefined value (-DSHup) that is lower than the first predefined value;
• if the delivery air temperature (TDi) is comprised between the second negative threshold value and a third negative threshold value lower than the second negative threshold value, setting the superheat error (SHEi) equal to a third predefined value (DSHdw) that is greater than the first predefined value.

2. Method according to claim 1, wherein the first predefined value is equal to 0°C.

3. Method according to claim 1 or 2, wherein, as the delivery air temperature (TDi) is comprised between the first negative threshold value and the second negative threshold value, or is equal to the first negative threshold value or the second negative threshold value, and decreases, the superheat error (SHEi) increases linearly,
or wherein, as the delivery air temperature (TDi) is comprised between the first positive threshold value and the second positive threshold value, or is equal to the first positive threshold value or the second positive threshold value, and increases, the superheat error (SHEi) decreases linearly.

4. Method according to anyone of the preceding claims, wherein the second predefined value (-DSHup) is equal to the superheat error (SHEi) calculated when the delivery air temperature (TDi) is equal to the second positive threshold value, and
wherein the third predefined value (DSHdw) is equal to the superheat error (SHEi) calculated when the delivery air temperature (TDi) is equal to the second negative threshold value.

5. Method according to anyone of the preceding claims, wherein the step of regulating the respective refrigerated air flow from each indoor unit (9) further comprises controlling the flow of the refrigerant fluid passing through the respective expansion mean (4) based on a respective superheat setpoint (SHSi).

6. Method according to claim 5, wherein, for each indoor unit (9), controlling the respective flow of the refrigerant fluid passing through the respective expansion mean (4) comprises generating a superheat command (SHCi) for controlling the respective expansion mean (4), the superheat command (SHCi) being indicative of the sum of the respective superheat setpoint (SHSi) and of the respective superheat error (SHEi).

7. Method according to claim 5 or 6, further comprising, for each indoor unit (9), updating the respective superheat setpoint (SHSi) to be used at the current iteration according to the respective superheat error (SHEi) calculated at the immediately precedent iteration.

8. Method according to claim 2 and claim 7, wherein updating the respective superheat setpoint (SHSi) comprises performing the following:
• if the superheat error (SHEi) calculated at the immediately precedent iteration is lower than 0° C and, in absolute value, greater than a superheat threshold, setting the superheat setpoint (SHSi) at the current iteration at a value equal to a superheat setpoint (SHSi) used at the immediately precedent iteration, decreased by a predefined superheat amount;
• if the superheat error (SHEi) calculated at the immediately precedent iteration is greater than 0°C and greater than the superheat threshold, setting the superheat setpoint (SHSi) at the current iteration at a value equal to the superheat setpoint (SHSi) used at the immediately precedent iteration, increased by the predefined superheat amount;
• if the superheat error (SHEi) calculated at the immediately precedent iteration is, in absolute value, lower than, or equal to, the superheat threshold, setting the superheat setpoint (SHSi) at the current iteration at a value equal to the superheat setpoint (SHSi) used at the immediately precedent iteration.

9. Method according to anyone of the preceding claims, wherein, for each indoor unit (9), the superheat error (SHEi) to be used at the current iteration is further calculated by the control unit (17) at the immediately precedent iteration by performing the following:
• if the delivery air temperature (TDi) is greater than, or equal to, the third positive threshold value, decreasing a refrigerant fluid pumping power of the first outdoor unit (7);
• if the delivery air temperature (TDi) is lower than, or equal to, the third negative threshold value, increasing the refrigerant fluid pumping power of the first outdoor unit (7) .

10. Method according to claim 9 and anyone of claims 5-8, further comprising the step of, at the current iteration, decreasing the refrigerant fluid pumping power of the first outdoor unit (7) if the superheat setpoint (SHSi) has been stable in a number of iterations that are immediately precedent to the current iteration, and if the superheat setpoint (SHSi) for each expansion mean (4) at the current iteration is greater than a standard superheat setpoint.

11. Air-cooled refrigeration cycle apparatus (1) comprising a control unit (17), a first outdoor unit (7) and a plurality of indoor units (9) housed in at least one closed space (11, 13),
each indoor unit (9) comprising:
- a respective expansion mean (4) that is controllable by the control unit (17), is fluidly connected in series to the first outdoor unit (7) and is configured to decrease the pressure, between an inlet (4a) and an outlet (4b) of said expansion mean (4), of a refrigerant fluid coming from the first outdoor unit (7),
- a respective evaporator (5) fluidly connected in series between the respective expansion mean (4) and the first outdoor unit (7), and configured to allow a passage of phase from liquid to gaseous state of said refrigerant fluid between an inlet (5a) and an outlet (5b) of said evaporator (5), thus generating a respective refrigerated air flow in the closed space (11, 13), and
- a respective temperature sensor (15) configured for detecting a delivery air temperature (TDi) of a refrigerated air flow,
wherein the control unit (17) is configured to regulate, at a current iteration, the respective refrigerated air flow from each indoor unit (9) by controlling, based on a respective superheat error (SHEi), the flow of the refrigerant fluid passing through the respective expansion mean (4), and
**characterized in that** for each indoor unit (9), the control unit (17) is further configured to calculate, at an iteration that is immediately precedent to the current iteration, the superheat error (SHEi) at the current iteration, by:
- acquiring the delivery air temperature (TDi) through the respective temperature sensor (15), and
- performing the following:
• if the delivery air temperature (TDi) is comprised between a first negative threshold value, lower than a supply air setpoint temperature (TDSi), and a first positive threshold value, greater than the supply air setpoint temperature (TDSi), setting the superheat error (SHEi) equal to a first predefined value;
• if the delivery air temperature (TDi) is comprised between the first negative threshold value and a second negative threshold value lower than the first negative threshold value, or is equal to the first negative threshold value or the second negative threshold value, increasing the superheat error (SHEi) as the delivery air temperature (TDi) decreases;
• if the delivery air temperature (TDi) is comprised between the first positive threshold value and a second positive threshold value greater than the first positive threshold value, or is equal to the first positive threshold value or the second positive threshold value, decreasing the superheat error (SHEi) as the delivery air temperature (TDi) increases;
• if the delivery air temperature (TDi) is comprised between the second positive threshold value and a third positive threshold value greater than the second positive threshold value, setting the superheat error (SHEi) equal to a second predefined value (-DSHup) that is lower than the first predefined value;
• if the delivery air temperature (TDi) is comprised between the second negative threshold value and a third negative threshold value lower than the second negative threshold value, setting the superheat error (SHEi) equal to a third predefined value (DSHdw) that is greater than the first predefined value.

12. Air-cooled refrigeration cycle apparatus (1) according to claim 11, wherein the first outdoor unit (7) comprises:
- a first compressor mean (2) configured to increase the pressure of a refrigerant fluid between an inlet (2a) and an outlet (2b) of said first compressor mean (2), and
- an air-cooled module (3) fluidly connected in series to said first compressor mean (2) for cooling said refrigerant fluid.

13. Air-cooled refrigeration cycle apparatus (1) according to claim 11 or 12, wherein the first outdoor unit (7) comprises said control unit (17).

14. Air-cooled refrigeration cycle apparatus (1) according to anyone of claims 11-13, further comprising at least a second outdoor unit (7) fluidly connected in series to each indoor unit (7) and in parallel to the first outdoor unit (7).

15. Computer program product loadable in a computer and designed in such a way that, when executed, the computer becomes configured to execute a method according to anyone of claims 1-10.

## Patentansprüche

1. Verfahren zum Steuern einer luftgekühlten Kühlkreislaufvorrichtung (1) umfassend eine Steuereinheit (17), eine erste Außeneinheit (7) und eine Vielzahl von Inneneinheiten (9), die in mindestens einem geschlossenen Raum (11, 13) untergebracht sind,
wobei jede Inneneinheit (9) umfasst:
- ein jeweiliges Expansionsmittel (4), das durch die Steuereinheit (17) steuerbar ist, in Reihe mit der ersten Außeneinheit (7) fluidisch verbunden ist und so ausgebildet ist, dass es den Druck eines von der ersten Außeneinheit (7) kommenden Kältemittels zwischen einem Einlass (4a) und einem Auslass (4b) des Expansionsmittels (4) verringert,
- einen jeweiligen Verdampfer (5), der zwischen dem jeweiligen Expansionsmittel (4) und der ersten Außeneinheit (7) fluidisch in Reihe verbunden ist und so ausgebildet ist, dass er einen Phasenübergang von einem flüssigen zu einem gasförmigen Zustand des Kältemittels zwischen einem Einlass (5a) und einem Auslass (5b) des Verdampfers (5) ermöglicht, wodurch ein entsprechender gekühlter Luftstrom in dem geschlossenen Raum (11, 13) erzeugt wird, und
- einen entsprechenden Temperatursensor (15), der so ausgebildet ist, dass er eine Zulufttemperatur (TDi) eines gekühlten Luftstroms detektiert,
wobei das Verfahren den Schritt des Regulierens bei einer aktuellen Iteration durch die Steuereinheit (17) des jeweiligen gekühlten Luftstroms von jeder Inneneinheit (9) durch Steuern des Stroms des durch das jeweilige Expansionsmittel (4) hindurchströmenden Kältemittels auf der Basis eines jeweiligen Überhitzungsfehlers (SHEi) umfasst,
**dadurch gekennzeichnet, dass** für jede Inneneinheit (9) der Überhitzungsfehler (SHEi) bei der aktuellen Iteration durch die Steuereinheit (17) bei einer Iteration berechnet wird, die unmittelbar vor der aktuellen Iteration liegt, durch:
- Erfassen der Zulufttemperatur (TDi) durch den jeweiligen Temperatursensor (15) und
- Ausführen des Folgenden:
- wenn die Zulufttemperatur (TDi) zwischen einem ersten negativen Schwellenwert, der niedriger als eine Sollwerttemperatur der Zuluft TDSi (TDSi) ist, und einem ersten positiven Schwellenwert liegt, der höher als die Sollwerttemperatur der Zuluft TDSi (TDSi) ist, wird der Überhitzungsfehler (SHEi) auf einen ersten vorbestimmten Wert gesetzt;
- wenn die Zulufttemperatur (TDi) zwischen dem ersten negativen Schwellenwert und einem zweiten negativen Schwellenwert liegt, der niedriger als der erste negative Schwellenwert ist, oder gleich dem ersten negativen Schwellenwert oder dem zweiten negativen Schwellenwert ist, wird der Überhitzungsfehler (SHEi) erhöht, wenn die Zulufttemperatur (TDi) abnimmt;
- wenn die Zulufttemperatur (TDi) zwischen dem ersten positiven Schwellenwert und einem zweiten positiven Schwellenwert liegt, der größer als der erste positive Schwellenwert ist, oder gleich dem ersten positiven Schwellenwert oder dem zweiten positiven Schwellenwert ist, wird der Überhitzungsfehler (SHEi) verringert, wenn die Zulufttemperatur (TDi) steigt;
- wenn die Zulufttemperatur (TDi) zwischen dem zweiten positiven Schwellenwert und einem dritten positiven Schwellenwert liegt, der größer als der zweite positive Schwellenwert ist, wird der Überhitzungsfehler (SHEi) auf einen zweiten vorbestimmten Wert (-DSHup) gesetzt, der niedriger als der erste vorbestimmte Wert ist;
- wenn die Zulufttemperatur (TDi) zwischen dem zweiten negativen Schwellenwert und einem dritten negativen Schwellenwert liegt, der niedriger als der zweite negative Schwellenwert ist, wird der Überhitzungsfehler (SHEi) gleich einem dritten vorbestimmten Wert (DSHdw) gesetzt, der größer als der erste vorbestimmte Wert ist.

2. Verfahren nach Anspruch 1, wobei der erste vorbestimmte Wert gleich 0 °C ist.

3. Verfahren nach Anspruch 1 oder 2, wobei, wenn die Zulufttemperatur (TDi) zwischen dem ersten negativen Schwellenwert und dem zweiten negativen Schwellenwert liegt oder gleich dem ersten negativen Schwellenwert oder dem zweiten negativen Schwellenwert ist und abnimmt, der Überhitzungsfehler (SHEi) linear zunimmt,
oder wobei, wenn die Zulufttemperatur (TDi) zwischen dem ersten positiven Schwellenwert und dem zweiten positiven Schwellenwert liegt oder gleich dem ersten positiven Schwellenwert oder dem zweiten positiven Schwellenwert ist und ansteigt, der Überhitzungsfehler (SHEi) linear abnimmt.

4. Verfahren nach einem der vorhergehenden Ansprüche, wobei der zweite vorbestimmte Wert (-DSHup) gleich dem Überhitzungsfehler (SHEi) ist, der berechnet wird, wenn die Zulufttemperatur (TDi) gleich dem zweiten positiven Schwellenwert ist, und
wobei der dritte vorbestimmte Wert (DSHdw) gleich dem Überhitzungsfehler (SHEi) ist, der berechnet wird, wenn die Zulufttemperatur (TDi) gleich dem zweiten negativen Schwellenwert ist.

5. Verfahren nach einem der vorhergehenden Ansprüche, wobei der Schritt des Regulierens des jeweiligen gekühlten Luftstroms von jeder Inneneinheit (9) ferner das Steuern des Stroms des Kältemittels, das durch das jeweilige Expansionsmittel (4) strömt, auf der Basis eines jeweiligen Überhitzungssollwerts (SHSi) umfasst.

6. Verfahren nach Anspruch 5, wobei für jede Inneneinheit (9) das Steuern des jeweiligen Stroms des Kältemittels, das durch das jeweilige Expansionsmittel (4) strömt, das Erzeugen eines Überhitzungsbefehls (SHCi) zum Steuern des jeweiligen Expansionsmittels (4) umfasst, wobei der Überhitzungsbefehl (SHCi) die Summe des jeweiligen Überhitzungssollwerts (SHSi) und des jeweiligen Überhitzungsfehlers (SHEi) angibt.

7. Verfahren nach Anspruch 5 oder 6, das ferner für jede Inneneinheit (9) das Aktualisieren des jeweiligen Überhitzungssollwerts (SHSi) umfasst, der bei der aktuellen Iteration gemäß dem jeweiligen Überhitzungsfehler (SHEi) zu verwenden ist, der bei der unmittelbar vorhergehenden Iteration berechnet wurde.

8. Verfahren nach Anspruch 2 und Anspruch 7, wobei das Aktualisieren des jeweiligen Überhitzungssollwerts (SHSi) das Durchführen des Folgenden umfasst:
- wenn der bei der unmittelbar vorhergehenden Iteration berechnete Überhitzungsfehler (SHEi) kleiner als 0° C ist und im Absolutwert größer als ein Überhitzungsschwellenwert ist, wird der Überhitzungssollwert (SHSi) bei der aktuellen Iteration auf einen Wert gesetzt, der dem bei der unmittelbar vorhergehenden Iteration verwendeten Überhitzungssollwert (SHSi) entspricht, verringert um einen vorgegebenen Überhitzungsbetrag;
- wenn der bei der unmittelbar vorhergehenden Iteration berechnete Überhitzungsfehler (SHEi) größer als 0 °C und größer als der Überhitzungsschwellenwert ist, wird der Überhitzungssollwert (SHSi) bei der aktuellen Iteration auf einen Wert gesetzt, der dem bei der unmittelbar vorhergehenden Iteration verwendeten Überhitzungssollwert (SHSi) entspricht, erhöht um den vorgegebenen Überhitzungsbetrag;
- wenn der bei der unmittelbar vorhergehenden Iteration berechnete Überhitzungsfehler (SHEi) im Absolutwert niedriger als oder gleich dem Überhitzungsschwellenwert ist, wird der Überhitzungssollwert (SHSi) bei der aktuellen Iteration auf einen Wert gesetzt, der dem Überhitzungssollwert (SHSi) entspricht, der bei der unmittelbar vorhergehenden Iteration verwendet wurde.

9. Verfahren nach einem der vorhergehenden Ansprüche,
wobei für jede Inneneinheit (9) der bei der aktuellen Iteration zu verwendende Überhitzungsfehler (SHEi) von der Steuereinheit (17) bei der unmittelbar vorhergehenden Iteration weiter berechnet wird, indem Folgendes durchgeführt wird:
- wenn die Zulufttemperatur (TDi) größer als oder gleich dem dritten positiven Schwellenwert ist, wird die Pumpleistung des Kältemittels der ersten Außeneinheit (7) verringert;
- wenn die Zulufttemperatur (TDi) niedriger als oder gleich dem dritten negativen Schwellenwert ist, wird die Pumpleistung des Kältemittels der ersten Außeneinheit (7) erhöht.

10. Verfahren nach Anspruch 9 und einem der Ansprüche 5 - 8, weiterhin umfassend den Schritt, dass bei der aktuellen Iteration die Pumpleistung des Kältemittels der ersten Außeneinheit (7) verringert wird, wenn der Überhitzungssollwert (SHSi) in einer Anzahl von Iterationen, die der aktuellen Iteration unmittelbar vorausgehen, stabil war und wenn der Überhitzungssollwert (SHSi) für jedes Expansionsmittel (4) bei der aktuellen Iteration größer als ein Standardüberhitzungssollwert ist.

11. Luftgekühlte Kühlkreislaufvorrichtung (1) mit einer Steuereinheit (17), einer ersten Außeneinheit (7) und einer Vielzahl von Inneneinheiten (9), die in mindestens einem geschlossenen Raum (11, 13) untergebracht sind,
wobei jede Inneneinheit (9) umfasst:
- ein jeweiliges Expansionsmittel (4), das durch die Steuereinheit (17) steuerbar ist, in Reihe mit der ersten Außeneinheit (7) fluidisch verbunden ist und so ausgebildet ist, dass es den Druck eines von der ersten Außeneinheit (7) kommenden Kältemittels zwischen einem Einlass (4a) und einem Auslass (4b) des Expansionsmittels (4) verringert,
- einen jeweiligen Verdampfer (5), der fluidisch in Reihe zwischen dem jeweiligen Expansionsmittel (4) und der ersten Außeneinheit (7) verbunden ist und so ausgebildet ist, dass er einen Phasenübergang von einem flüssigen zu einem gasförmigen Zustand des Kältemittels zwischen einem Einlass (5a) und einem Auslass (5b) des Verdampfers (5) ermöglicht, wodurch ein jeweiliger gekühlter Luftstrom in dem geschlossenen Raum (11, 13) erzeugt wird, und
- einen jeweiligen Temperatursensor (15), der zum Erfassen einer Zulufttemperatur (TDi) eines gekühlten Luftstroms ausgebildet ist,
wobei die Steuereinheit (17) dazu ausgebildet ist, bei einer aktuellen Iteration den jeweiligen gekühlten Luftstrom von jeder Inneneinheit (9) zu regeln durch Steuern auf der Basis eines jeweiligen Überhitzungsfehlers (SHEi) des Stroms des Kältemittels, das durch das jeweilige Expansionsmittel (4) strömt, und
**dadurch gekennzeichnet, dass** die Steuereinheit (17) für jede Inneneinheit (9) weiterhin so ausgebildet ist, dass sie bei einer Iteration, die der aktuellen Iteration unmittelbar vorausgeht, den Überhitzungsfehler (SHEi) bei der aktuellen Iteration berechnet durch:
- Erfassen der Zulufttemperatur (TDi) über den jeweiligen Temperatursensor (15), und
- Durchführen des Folgenden:
- wenn die Zulufttemperatur (TDi) zwischen einem ersten negativen Schwellenwert, der niedriger als eine Sollwerttemperatur der Zuluft (TDSi) ist, und einem ersten positiven Schwellenwert liegt, der höher als die Sollwerttemperatur der Zuluft (TDSi) ist, wird der Überhitzungsfehler (SHEi) auf einen ersten vorbestimmten Wert gesetzt;
- wenn die Zulufttemperatur (TDi) zwischen dem ersten negativen Schwellenwert und einem zweiten negativen Schwellenwert liegt, der niedriger als der erste negative Schwellenwert ist, oder gleich dem
ersten negativen Schwellenwert oder dem zweiten negativen Schwellenwert ist, wird der Überhitzungsfehler (SHEi) erhöht, wenn die Zulufttemperatur (TDi) sinkt;
- wenn die Zulufttemperatur (TDi) zwischen dem ersten positiven Schwellenwert und einem zweiten positiven Schwellenwert liegt, der größer als der erste positive Schwellenwert ist, oder dem ersten positiven Schwellenwert oder dem zweiten positiven Schwellenwert entspricht, wird der Überhitzungsfehler (SHEi) verringert, wenn die Zulufttemperatur (TDi) steigt;
- wenn die Zulufttemperatur (TDi) zwischen dem zweiten positiven Schwellenwert und einem dritten positiven Schwellenwert liegt, der größer als der zweite positive Schwellenwert ist, wird der
Überhitzungsfehler (SHEi) auf einen zweiten vorbestimmten Wert (-DSHup) gesetzt, der niedriger als der erste vorbestimmte Wert ist;
- wenn die Zulufttemperatur (TDi) zwischen dem zweiten negativen Schwellenwert und einem dritten negativen Schwellenwert liegt, der niedriger ist als der zweite negative Schwellenwert, wird der Überhitzungsfehler (SHEi) auf einen dritten vorbestimmten Wert (DSHdw) gesetzt, der größer ist als der erste vorbestimmte Wert.

12. Luftgekühlte Kühlkreislaufvorrichtung (1) nach Anspruch 11, wobei die erste Außeneinheit (7) umfasst:
- ein erstes Kompressormittel (2), das so ausgebildet ist, dass es den Druck eines Kältemittels zwischen einem Einlass (2a) und einem Auslass (2b) des ersten Kompressormittels (2) erhöht, und
- ein luftgekühltes Modul (3), das mit dem ersten Kompressormittel (2) fluidisch in Reihe verbunden ist, um das Kältemittel zu kühlen.

13. Luftgekühlte Kühlkreislaufvorrichtung (1) nach Anspruch 11 oder 12, wobei die erste Außeneinheit (7) die Steuereinheit (17) umfasst.

14. Luftgekühlte Kühlkreislaufvorrichtung (1) nach einem der Ansprüche 11 bis 13, ferner umfassend mindestens eine zweite Außeneinheit (7), die fluidisch in Reihe mit jeder Inneneinheit (9) verbunden ist und parallel mit der ersten Außeneinheit (7) verbunden ist.

15. Computerprogrammprodukt, das in einen Computer geladen werden kann und so gestaltet ist, dass der Computer bei der Ausführung so ausgebildet wird, dass er ein Verfahren nach einem der Ansprüche 1 bis 10 ausführt.

## Revendications

1. Procédé de commande d'un appareil à cycle de réfrigération refroidi par air (1) comprenant une unité de commande (17), une première unité extérieure (7) et une pluralité d'unités intérieures (9) installées dans au moins un espace fermé (11, 13), chaque unité intérieure (9) comprenant :
- un moyen de détente (4) respectif qui est apte à être commandé par l'unité de commande (17), est raccordé de manière fluidique en série à la première unité extérieure (7) et est configuré pour diminuer la pression, entre une entrée (4a) et une sortie (4b) dudit moyen de détente (4), d'un fluide frigorigène provenant de la première unité extérieure (7),
- un évaporateur (5) respectif raccordé de manière fluidique en série entre le moyen de détente (4) respectif et la première unité extérieure (7), et configuré pour permettre un changement de phase de l'état liquide à gazeux dudit fluide frigorigène entre une entrée (5a) et une sortie (5b) dudit évaporateur (5), en générant ainsi un débit d'air réfrigéré respectif dans l'espace fermé (11, 13), et
- un capteur de température (15) respectif configuré pour la détection d'une température d'air de refoulement (TDi) d'un débit d'air réfrigéré,
le procédé comprenant l'étape de la régulation, à une itération actuelle et par l'unité de commande (17), du débit d'air réfrigéré respectif provenant de chaque unité intérieure (9) par la commande, sur la base d'une erreur de surchauffe (SHEi) respective, du débit du fluide frigorigène traversant le moyen de détente (4) respectif,
**caractérisé en ce que**
pour chaque unité intérieure (9), l'erreur de surchauffe (SHEi) à l'itération actuelle est calculée par l'unité de commande (17) à une itération qui précède immédiatement l'itération actuelle, par :
- l'acquisition de la température d'air de refoulement (TDi) par le biais du capteur de température (15) respectif, et - l'exécution de ce qui suit :
• si la température d'air de refoulement (TDi) est comprise entre une première valeur seuil négative, inférieure à une température de consigne d'air d'alimentation TDSi (TDSi), et une première valeur seuil positive, supérieure à la température de consigne d'air d'alimentation TDSi (TDSi), le réglage de l'erreur de surchauffe (SHEi) comme étant égale à une première valeur prédéfinie ;
• si la température d'air de refoulement (TDi) est comprise entre la première valeur seuil négative et une deuxième valeur seuil négative inférieure à la première valeur seuil négative, ou est égale à la première valeur seuil négative ou à la deuxième valeur seuil négative, l'augmentation de l'erreur de surchauffe (SHEi) à mesure que la température d'air de refoulement (TDi) diminue ;
• si la température d'air de refoulement (TDi) est comprise entre la première valeur seuil positive et une deuxième valeur seuil positive supérieure à la première valeur seuil positive, ou est égale à la première valeur seuil positive ou à la deuxième valeur seuil positive, la diminution de l'erreur de surchauffe (SHEi) à mesure que la température d'air de refoulement (TDi) augmente ;
• si la température d'air de refoulement (TDi) est comprise entre la deuxième valeur seuil positive et une troisième valeur seuil positive supérieure à la deuxième valeur seuil positive, le réglage de l'erreur de surchauffe (SHEi) comme étant égale à une deuxième valeur prédéfinie (-DSHup) qui est inférieure à la première valeur prédéfinie ;
• si la température d'air de refoulement (TDi) est comprise entre la deuxième valeur seuil négative et une troisième valeur seuil négative inférieure à la deuxième valeur seuil négative, le réglage de l'erreur de surchauffe (SHEi) comme étant égale à une troisième valeur prédéfinie (DSHdw) qui est supérieure à la première valeur prédéfinie.

2. Procédé selon la revendication 1, dans lequel la première valeur prédéfinie est égale à 0 °C.

3. Procédé selon la revendication 1 ou 2, dans lequel, lorsque la température d'air de refoulement (TDi) est comprise entre la première valeur seuil négative et la deuxième valeur seuil négative, ou est égale à la première valeur seuil négative ou à la deuxième valeur seuil négative, et diminue, l'erreur de surchauffe (SHEi) augmente linéairement,
ou dans lequel, lorsque la température d'air de refoulement (TDi) est comprise entre la première valeur seuil positive et la deuxième valeur seuil positive, ou est égale à la première valeur seuil positive ou à la deuxième valeur seuil positive, et augmente, l'erreur de surchauffe (SHEi) diminue linéairement.

4. Procédé selon l'une quelconque des revendications précédentes, dans lequel la deuxième valeur prédéfinie (-DSHup) est égale à l'erreur de surchauffe (SHEi) calculée lorsque la température d'air de refoulement (TDi) est égale à la deuxième valeur seuil positive, et
dans lequel la troisième valeur prédéfinie (DSHdw) est égale à l'erreur de surchauffe (SHEi) calculée lorsque la température d'air de refoulement (TDi) est égale à la deuxième valeur seuil négative.

5. Procédé selon l'une quelconque des revendications précédentes, dans lequel l'étape de régulation du débit d'air réfrigéré respectif provenant de chaque unité intérieure (9) comprend en outre la commande du débit du fluide frigorigène traversant le moyen de détente (4) respectif sur la base d'une consigne de surchauffe (SHSi) respective.

6. Procédé selon la revendication 5, dans lequel, pour chaque unité intérieure (9), la commande du débit respectif du fluide frigorigène traversant le moyen de détente (4) respectif comprend la génération d'une instruction de surchauffe (SHCi) pour la commande du moyen de détente (4) respectif, l'instruction de surchauffe (SHCi) étant indicative de la somme de la consigne de surchauffe (SHSi) respective et de l'erreur de surchauffe (SHEi) respective.

7. Procédé selon la revendication 5 ou 6, comprenant en outre, pour chaque unité intérieure (9), la mise à jour de la consigne de surchauffe (SHSi) respective devant être utilisée à l'itération actuelle selon l'erreur de surchauffe (SHEi) respective calculée à l'itération immédiatement précédente.

8. Procédé selon la revendication 2 et la revendication 7, dans lequel la mise à jour de la consigne de surchauffe (SHSi) respective comprend la réalisation de ce qui suit :
• si l'erreur de surchauffe (SHEi) calculée à l'itération immédiatement précédente est inférieure à 0 °C et, en valeur absolue, supérieure à un seuil de surchauffe, le réglage de la consigne de surchauffe (SHSi) à l'itération actuelle sur une valeur égale à une consigne de surchauffe (SHSi) utilisée à l'itération immédiatement précédente, diminuée d'une quantité de surchauffe prédéfinie ;
• si l'erreur de surchauffe (SHEi) calculée à l'itération immédiatement précédente est supérieure à 0 °C et supérieure au seuil de surchauffe, le réglage de la consigne de surchauffe (SHSi) à l'itération actuelle sur une valeur égale à la consigne de surchauffe (SHSi) utilisée à l'itération immédiatement précédente, augmentée de la quantité de surchauffe prédéfinie ;
• si l'erreur de surchauffe (SHEi) calculée à l'itération immédiatement précédente est, en valeur absolue, inférieure ou égale au seuil de surchauffe, le réglage de la consigne de surchauffe (SHSi) à l'itération actuelle sur une valeur égale à la consigne de surchauffe (SHSi) utilisée à l'itération immédiatement précédente.

9. Procédé selon l'une quelconque des revendications précédentes, dans lequel, pour chaque unité intérieure (9), l'erreur de surchauffe (SHEi) devant être utilisée à l'itération actuelle est en outre calculée par l'unité de commande (17) à l'itération immédiatement précédente par la réalisation de ce qui suit :
• si la température d'air de refoulement (TDi) est supérieure ou égale à la troisième valeur seuil positive, la diminution d'une puissance de pompage de fluide frigorigène de la première unité extérieure (7) ;
• si la température d'air de refoulement (TDi) est inférieure ou égale à la troisième valeur seuil négative, l'augmentation de la puissance de pompage de fluide frigorigène de la première unité extérieure (7) .

10. Procédé selon la revendication 9 et l'une quelconque des revendications 5 à 8, comprenant en outre l'étape, à l'itération actuelle, de la diminution de la puissance de pompage de fluide frigorigène de la première unité extérieure (7) si la consigne de surchauffe (SHSi) a été stable pendant un certain nombre d'itérations qui précèdent immédiatement l'itération actuelle, et si la consigne de surchauffe (SHSi) pour chaque moyen de détente (4) à l'itération actuelle est supérieure à une consigne de surchauffe standard.

11. Appareil à cycle de réfrigération refroidi par air (1) comprenant une unité de commande (17), une première unité extérieure (7) et une pluralité d'unités intérieures (9) installées dans au moins un espace fermé (11, 13),
chaque unité intérieure (9) comprenant :
- un moyen de détente (4) respectif qui est apte à être commandé par l'unité de commande (17), est raccordé de manière fluidique en série à la première unité extérieure (7) et est configuré pour diminuer la pression, entre une entrée (4a) et une sortie (4b) dudit moyen de détente (4), d'un fluide frigorigène provenant de la première unité extérieure (7),
- un évaporateur (5) respectif raccordé de manière fluidique en série entre le moyen de détente (4) respectif et la première unité extérieure (7), et configuré pour permettre un changement de phase de l'état liquide à gazeux dudit fluide frigorigène entre une entrée (5a) et une sortie (5b) dudit évaporateur (5), en générant ainsi un débit d'air réfrigéré respectif dans l'espace fermé (11, 13), et
- un capteur de température (15) respectif configuré pour la détection d'une température d'air de refoulement (TDi) d'un débit d'air réfrigéré,
dans lequel l'unité de commande (17) est configurée pour réguler, à une itération actuelle, le débit d'air réfrigéré respectif provenant de chaque unité intérieure (9) par la commande, sur la base d'une erreur de surchauffe (SHEi) respective, du débit du fluide frigorigène traversant le moyen de détente (4) respectif, et
**caractérisé en ce que**
pour chaque unité intérieure (9), l'unité de commande (17) est en outre configurée pour calculer, à une itération qui précède immédiatement l'itération actuelle, l'erreur de surchauffe (SHEi) à l'itération actuelle, par :
- l'acquisition de la température d'air de refoulement (TDi) par le biais du capteur de température (15) respectif, et
- la réalisation de ce qui suit :
• si la température d'air de refoulement (TDi) est comprise entre une première valeur seuil négative, inférieure à une température de consigne d'air d'alimentation (TDSi), et une première valeur seuil positive, supérieure à la température de consigne d'air d'alimentation (TDSi), le réglage de l'erreur de surchauffe (SHEi) comme étant égale à une première valeur prédéfinie ;
• si la température d'air de refoulement (TDi) est comprise entre la première valeur seuil négative et une deuxième valeur seuil négative inférieure à la première valeur seuil négative, ou est égale à la première valeur seuil négative ou à la deuxième valeur seuil négative, l'augmentation de l'erreur de surchauffe (SHEi) à mesure que la température d'air de refoulement (TDi) diminue ;
• si la température d'air de refoulement (TDi) est comprise entre la première valeur seuil positive et une deuxième valeur seuil positive supérieure à la première valeur seuil positive, ou est égale à la première valeur seuil positive ou à la deuxième valeur seuil positive, la diminution de l'erreur de surchauffe (SHEi) à mesure que la température d'air de refoulement (TDi) augmente ;
• si la température d'air de refoulement (TDi) est comprise entre la deuxième valeur seuil positive et une troisième valeur seuil positive supérieure à la deuxième valeur seuil positive, le réglage de l'erreur de surchauffe (SHEi) comme étant égale à une deuxième valeur prédéfinie (-DSHup) qui est inférieure à la première valeur prédéfinie ;
• si la température d'air de refoulement (TDi) est comprise entre la deuxième valeur seuil négative et une troisième valeur seuil négative inférieure à la deuxième valeur seuil négative, le réglage de l'erreur de surchauffe (SHEi) comme étant égale à une troisième valeur prédéfinie (DSHdw) qui est supérieure à la première valeur prédéfinie.

12. Appareil à cycle de réfrigération refroidi par air (1) selon la revendication 11, dans lequel la première unité extérieure (7) comprend :
- un premier moyen compresseur (2) configuré pour augmenter la pression d'un fluide frigorigène entre une entrée (2a) et une sortie (2b) dudit premier moyen compresseur (2), et
- un module refroidi par air (3) raccordé de manière fluidique en série audit premier moyen compresseur (2) pour le refroidissement dudit fluide frigorigène.

13. Appareil à cycle de réfrigération refroidi par air (1) selon la revendication 11 ou 12, dans lequel la première unité extérieure (7) comprend ladite unité de commande (17).

14. Appareil à cycle de réfrigération refroidi par air (1) selon l'une quelconque des revendications 11 à 13, comprenant en outre au moins une deuxième unité extérieure (7) raccordée de manière fluidique en série à chaque unité intérieure (7) et en parallèle à la première unité extérieure (7).

15. Produit programme d'ordinateur apte à être chargé dans un ordinateur et conçu d'une manière telle que, lorsqu'il est exécuté, l'ordinateur devienne configuré pour exécuter un procédé selon l'une quelconque des revendications 1 à 10.
